# EUROPÄISCHE PATENTANMELDUNG

(11) **EP 1 231 417 A2**
(43) Veröffentlichungstag der Anmeldung: **14.08.2002**
(21) Anmeldenummer: 01125945.4
(22) Anmeldetag: 31.10.2001
(51) Int. Cl.: F16J 15/32

(54) **Dichtungsring**

(30) Priorität: 13.02.2001 DE 10106500
(71) Anmelder: Kludi GmbH & Co. KG, 58706 Menden (DE)
(72) Erfinder: Lössner, Joachim, Dipl.-Ing., 58710 Menden (DE)
(74) Vertreter: COHAUSZ DAWIDOWICZ HANNIG & PARTNER

(57) **Zusammenfassung**

Die Erfindung betrifft einen Dichtungsring insbesondere O-Ring aus einem elastischen abdichtenden Material wie Gummi oder Kunststoff. Im Ringkörper ist eine zur Ringachse koaxiale insbesondere schlitzförmige Ringnut angeordnet.

## Beschreibung

Die Erfindung betrifft einen Dichtungsring insbesondere O-Ring aus einem elastischen abdichtenden Material wie Gummi oder Kunststoff.

Die Dichtwirkung von Dichtungsringen insbesondere von O-Ringen beruht auf der axialen und bei genügend hohem Druck auch auf der radialen Verformung des Schnurquerschnittes bzw. des Ringkörperquerschnittes. Hierdurch werden je nach Größe des Einbauraumes und des verwendeten Materials Anpresskräfte erzeugt, welche die Dichtwirkung realisieren. Diese Anpresskräfte erzeugen jedoch auch Reibungswiderstände zwischen den abzudichtenden Bauteilen, welche in bestimmten Betriebssituationen, zum Beispiel im Falle der radialen Bewegung von Schwenkausläufen an Küchenarmaturen, von Nachteil sind. Dies äußert sich besonders nach längerer Nichtbenutzung der Schwenkausläufe, da dann durch die Anpresskräfte der O-Ringe der Schmierstoff (Fett) zwischen den Dichtflächen verdrängt wurde.

Um eine besondere Leichtgängigkeit auch nach längerer Lagerung zu erzielen, ist es bekannt, speziell entwickelte Form- oder Lippendichtungen zu verwenden, welche geringere Anpresskräfte an den Dichtflächen erzeugen, aber aufgrund ihrer besonderen Querschnitttsgeometrien teuer in der Herstellung sind und sich nur mit speziellen Montagevorrichtungen montieren lassen. Letzteres ist bei Armaturen ein erheblicher Nachteil im Servicefall. Lippendichtungen sind außerdem bei Anwesenheit von Schmutz- oder Kalkablagerungen schnell undicht.

Aufgabe der Erfindung ist es, einen Dichtungsring insbesondere O-Ring so zu verbessern, dass er bei einfacher Herstellung und Montage eine hohe Dichtigkeit und Leichtgängigkeit bietet.

Diese Aufgabe wird erfindungsgemäß dadurch gelöst, dass im Ringkörper eine zur Ringachse koaxiale insbesondere schlitzförmige Ringnut angeordnet ist.

Hierdurch werden die Vorteile von O-Ringen, preiswerte Herstellung und Montierbarkeit ohne Hilfsmittel, mit den Vorteilen von Form- bzw. Lippendichtungen, geringe Anpresskräfte und damit Leichtgängigkeit bei radialer Bewegung kombiniert. Die Ringnut ermöglicht eine federnde Bewegung der beiden Schenkel des Schnurquerschnittes. Die Dichtwirkung beruht nun nicht mehr auf der Materialverformung des Querschnittes des Ringkörpers, sondern auf der wesentlich geringeren Federkraft der beiden miteinander verbundenen Halbringe. Die so ausgeführten geschlitzten Dichtungsringe lassen sich aufgrund ihrer Form problemlos wie O-Ringe von Hand montieren, sie müssen lediglich soweit gedreht werden, dass der Schlitz in Richtung des anstehenden Druckes liegt.

Vorteilhafte Ausgestaltungen der Erfindung sind in den Unteransprüchen aufgeführt.

Beispiele der Erfindung sind in den Zeichnungen dargestellt und werden im folgenden näher beschrieben. Es zeigen
- Fig. 1: einen axialen Schnitt durch ein erstes Ausführungsbeispiel mit keilförmiger Ringnut,
- Fig. 2: einen vergrößerten Ausschnitt aus dem ersten Ausführungsbeispiel,
- Fig. 3: eine perspektivische Ansicht des ersten Ausführungsbeispiel,
- Fig. 4: einen axialen Schnitt durch ein zweites Ausführungsbeispiel mit gleich breiter Ringnut,
- Fig. 5: einen vergrößerten Schnitt aus dem zweiten Ausführungsbeispiel,
- Fig. 6: eine perspektivische Ansicht des zweiten Ausführungsbeispiel,
- Fig. 7: einen axialen Schnitt durch ein drittes Ausführungsbeispiel mit innerem Hohlraum,
- Fig. 8: einen vergrößerten Ausschnitt aus dem dritten Ausführungsbeispiel,
- Fig. 9: eine perspektivische Ansicht des dritten Ausführungsbeispiel.

Der Dichtungsring 1 insbesondere in Form eines O-Ringes besitzt einen Ringkörper 2 aus elastischem Material (Gummi oder Kunststoff) mit kreisförmigem Querschnitt. In einer der beiden Seitenflächen 3, 4 mündet eine im Ringkörper eingebrachte schlitzförmige Ringnut 5, die koaxial zur Ringachse 6 liegt. Die Ringnut unterteilt den Ringkörper in zwei Schenkel 7, 8, zwischen denen die Ringnut 5 liegt und die zueinander beweglich sind.

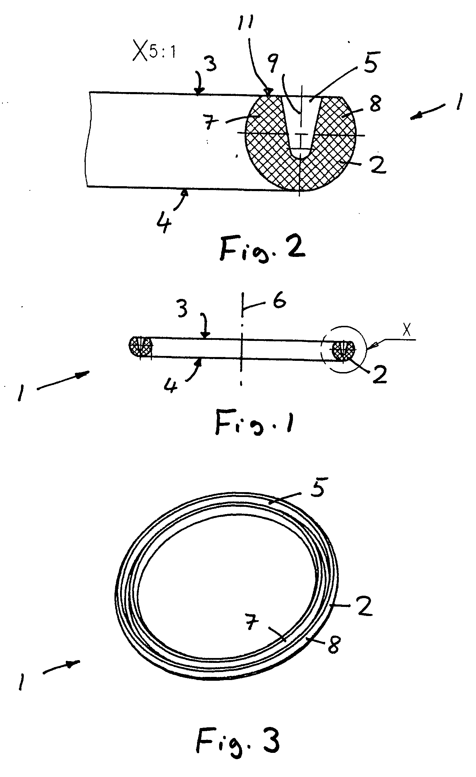

Im Querschnitt ist die Ringnut 5 radial im Querschnitt des Ringkörpers 2 angeordnet, wie dies die Fig. 2, 5 und 8 zeigen. Hierbei kann die Ringnut länger bzw. tiefer den Ringkörper durchqueren als die Länge des Radius 9, das heißt die Ringnut durchquert den Ringkörperquerschnitt über die Querschnittmitte hinaus.

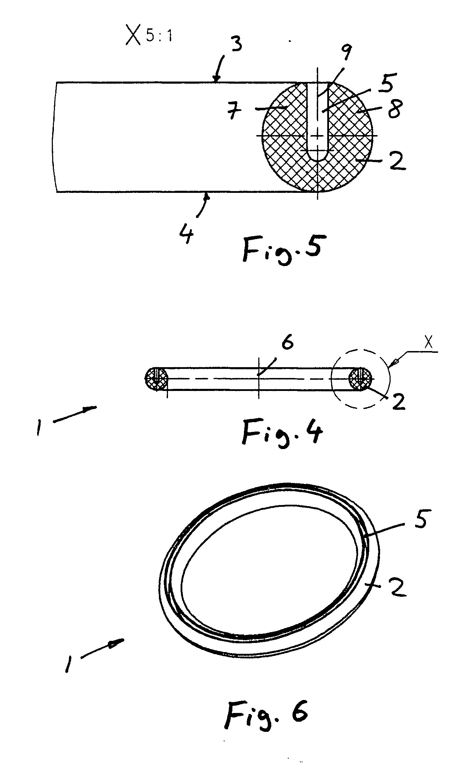

Die Ringnut 5 kann eine gleichbleibende Breite besitzen, wie dies Fig. 5 zeigt. Stattdessen kann die Ringnut aber auch in ihrer Breite nach außen hin zunehmen, siehe Fig. 2. Ferner kann die Ringkörperseitenfläche 3, in die die Ringnut 5 mündet, eine Anflachung 11 aufweisen. Ferner kann zumindest eine Seitenfläche 3 eine Anflachung 11 bilden.

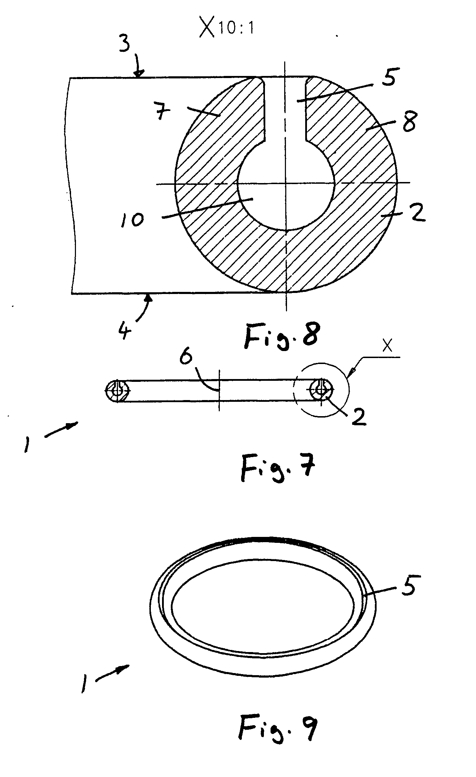

Im Ausführungsbeispiel nach den Fig. 7 bis 9 weist der Ringkörper 2 einen mittigen koaxialen ringförmigen Hohlraum 10 auf, in den die Ringnut mündet. Dies erhöht die Flexibilität des Dichtungsrings.

In nicht dargestellten Alternativen kann der Querschnitt des Ringkörpers 2 auch nicht kreisförmig und somit unrund insbesondere oval oder eckig sein.

## Patentansprüche

1. Dichtungsring (1) insbesondere O-Ring aus einem elastischen abdichtenden Material wie Gummi oder Kunststoff, **dadurch gekennzeichnet, dass** im Ringkörper (2) eine insbesondere schlitzförmige Ringnut (5) angeordnet ist, die mit dem Ringkörper umläuft.

2. Dichtungsring nach Anspruch 1, **dadurch gekennzeichnet, dass** die Ringnut (5) zur Ringachse koaxial ist.

3. Dichtungsring nach Anspruch 1 oder 2, **dadurch gekennzeichnet, dass** die Ringnut (5) sich zur Ringkörperoberfläche insbesondere zur Ringoberseite (3) oder -unterseite (4) öffnet.

4. Dichtungsring nach einem der Ansprüche 1 bis 3, **dadurch gekennzeichnet, dass** die Breite der Ringnut (5) über ihre Höhe konstant ist.

5. Dichtungsring nach einem der Ansprüche 1 bis 3, **dadurch gekennzeichnet, dass** die Breite der Ringnut (5) über ihre Höhe zur Ringoberfläche hin zunimmt.

6. Dichtungsring nach einem der vorherigen Ansprüche, **dadurch gekennzeichnet, dass** der Ringkörper (2) einen kreisförmigen Querschnitt besitzt.

7. Dichtungsring nach Anspruch 6, **dadurch gekennzeichnet, dass** die Ringnut (5) im Ringkörperquerschnitt radial und insbesondere parallel zur Ringachse (6) angeordnet ist.

8. Dichtungsring nach einem der vorherigen Ansprüche, **dadurch gekennzeichnet, dass** die Ringnut (5) eine größere Tiefe besitzt als der Radius des Ringkörperquerschnitts.

9. Dichtungsring nach einem der vorherigen Ansprüche, **dadurch gekennzeichnet, dass** die Ringkörperseitenfläche (3), in die die Ringnut (5) mündet, eine Anflachung (11) aufweist.

10. Dichtungsring nach einem der vorherigen Ansprüche, **dadurch gekennzeichnet, dass** im Ringkörper (2) ein koaxialer ringförmiger mittiger Hohlraum (10) ist, in den die Ringnut (5) mündet.

11. Dichtungsring nach Anspruch 10, **dadurch gekennzeichnet, dass** der Hohlraum (10) einen kreisförmigen Querschnitt besitzt.
